# EUROPEAN PATENT APPLICATION

(11) **EP 3 957 867 A1**
(43) Date of publication of application: **23.02.2022**
(21) Application number: 20790416.0
(22) Date of filing: 14.04.2020
(51) Int. Cl.: F15B 15/10, F15B 15/28, G01B 7/02

(54) **HYDRAULIC ACTUATOR AND DETECTION UNIT**

(30) Priority: 16.04.2019 JP 2019078191
(71) Applicant: BRIDGESTONE CORPORATION, Chuo-ku Tokyo 104-8340 (JP)
(72) Inventor: SAKURAI Ryo, Tokyo 104-8340 (JP); SAKURAI Hideyuki, Tokyo 104-8340 (JP)
(74) Representative: Oxley, Robin John George
(86) International application number: PCT/JP2020/016363
(87) International publication number: WO 2020/213583

(57) **Abstract**

A fluid pressure actuator (10) is provided with an actuator main portion (100) whose shape is changed by the expansion or contraction of a cylindrical tube expanded and contracted by the pressure of fluid, and a detection unit (500) for detecting the length L of the actuator main portion (100) along the longitudinal direction of the tube.

## Description

### [Technical Field]

The present invention relates to a fluid pressure actuator, and more particularly to a so-called McKibben type fluid pressure actuator and a detection unit.

### [Background Art]

Conventionally, as a fluid pressure actuator for expanding and contracting a tube using gas or liquid, a structure (so-called McKibben type) including a rubber tube expanding and contracting by air pressure (or liquid pressure) and a sleeve covering an outer periphery of the tube is widely adopted.

The sleeve is formed as a tubular structural body in which a high tension fiber such as a polyamide fiber, or a metal cord is braided. The sleeve is formed to restrict an expansion movement of the tube within a predetermined range (see Patent Literature 1).

### [Citation List]

### [Patent Literature]

[Patent Literature 1] WO 2017/010304

### [Summary of Invention]

In recent years, the Internet of Things (IoT) has been promoted, and in order to connect to IoT, it is desirable that connected devices have various sensing functions.

For example, in the case of a McKibben type fluid pressure actuator, since the actuator main portion expands and contracts due to expansion and contraction of the tube, it is preferable to have a sensor capable of detecting the length of the actuator main portion.

As a simple method, it is conceivable to estimate the length of the actuator main portion in real time based on the pressure of the fluid supplied to the fluid pressure actuator. However, in the case of a McKibben type fluid pressure actuator, it is difficult to accurately detect (estimate) the length of the actuator main portion from the pressure of the fluid because the length of the actuator main portion may vary depending on the magnitude of the load applied to the fluid pressure actuator.

Accordingly, an object of the present invention is to provide a fluid pressure actuator and a detection unit capable of accurately and in real time detecting the length of the actuator main portion.

One aspect of the present invention is a fluid pressure actuator (For example, fluid pressure actuator 10) including an actuator main portion (actuator main portion 100) including a tube (tube 110) having a cylindrical shape that is expanded and contracted by pressure of fluid and changing in shape by expansion or contraction of the tube, and a detection unit (detection unit 500) for detecting a length (length L) of the actuator main portion along a longitudinal direction of the tube.

One aspect of the present invention is a detection unit (detection unit 500) connected to a fluid pressure actuator. The fluid pressure actuator (For example, fluid pressure actuator 10) includes an actuator main portion (actuator main portion 100) including a tube (tube 110) having a cylindrical shape that is expanded and contracted by pressure of fluid and changing in shape by expansion or contraction of the tube, and the detection unit detects a length (length L) of the actuator main portion along a longitudinal direction of the tube.

### [Brief Description of Drawings]

FIG. 1 is a side view of a fluid pressure actuator 10 including a detection unit 500.
FIG. 2 is a side view of the fluid pressure actuator 10.
FIG. 3 is an exploded perspective view of an actuator main portion 100.
FIG. 4 is a functional block diagram of the detection unit 500 for detecting the length of the fluid pressure actuator 10.
FIG. 5 is a diagram showing an estimated operation flow of the length L of the actuator main portion 100 by the detection unit 500.
FIG. 6 is a graph showing the relationship between the contraction rate (%) of the actuator main portion 100 and the electrical resistance value (MΩ) of the tube 110.
FIG. 7A is a diagram schematically showing the dispersion of carbon particles contained in tube 110 ((state in which the actuator main portion 100 is not contracted).
FIG. 7B is a diagram schematically showing a dispersion of carbon particles contained in the tube 110 (state in which the actuator main portion 100 is contracted).
FIG. 8 is a side view of a fluid pressure actuator 10 A according to modified example.
FIG. 9 is a side view of a fluid pressure actuator 10 B according to another modified example.

### [Description of Embodiments]

Embodiments will be described below with reference to the drawings. The same functions and configurations are denoted by the same or similar reference numerals, and description thereof will be omitted as appropriate.

### (1)Overall schematic configuration of fluid pressure actuator and detection unit

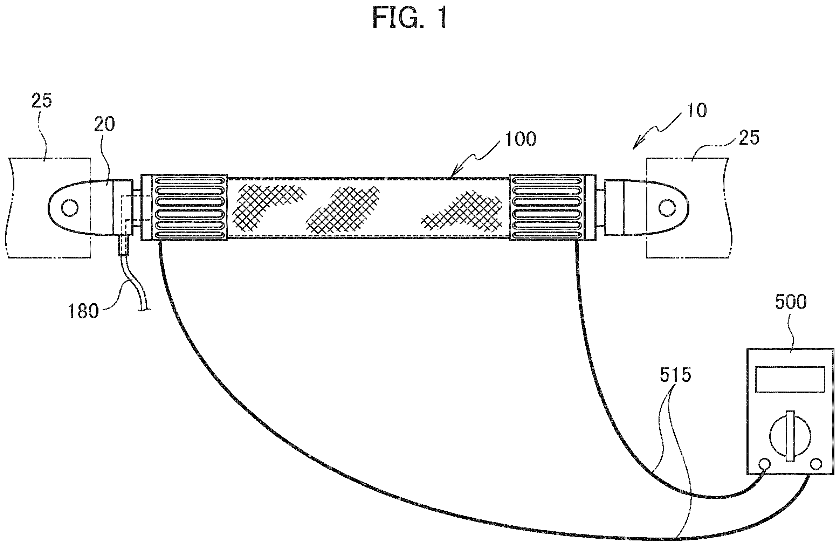

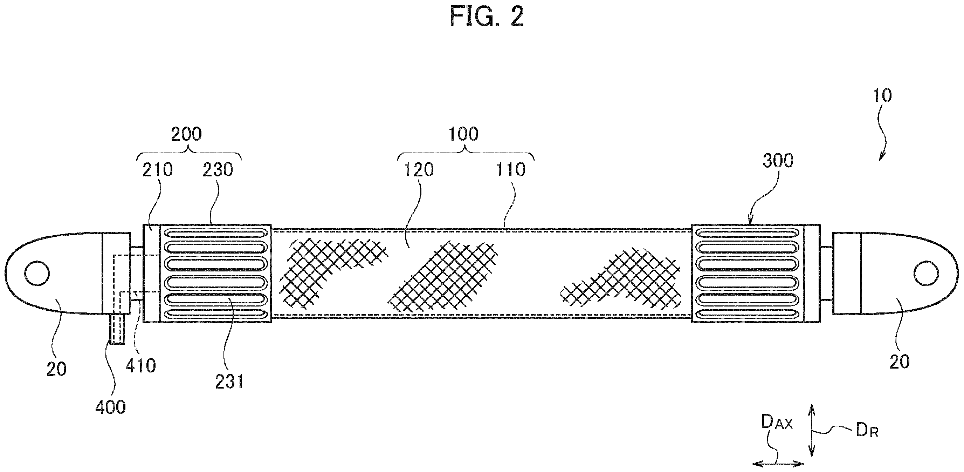

FIG. 1 is a side view of a fluid pressure actuator 10 including a detection unit 500 according to the present embodiment. As shown in FIG. 1, the fluid pressure actuator 10 is an actuator that utilizes fluid pressure and includes an actuator main portion 100 that expands and contracts along an axial direction D_{AX} (see FIG. 2).

The fluid pressure actuator 10 has two connecting parts 20. A member 25 to be operated by the fluid pressure actuator 10 is connected to the connecting part 20. For example, the connecting part 20 is connected to members constituting the body limbs (upper and lower limbs, etc.) of the humanoid robot.

A hose 180 is connected to the fluid pressure actuator 10. The other end of the hose 180 is connected to a supply device (not shown) such as a compressor for supplying a fluid (gas or liquid). Fluid flows in and out of the actuator main portion 100 through a hose 180.

The detection unit 500 is connected to the fluid pressure actuator 10 by using a lead wire 515. The detection unit 500 detects the length of the fluid pressure actuator 10 along the axial direction D_{AX} (longitudinal direction).

Specifically, the detection unit 500 detects the length of the actuator main portion 100 along the axial direction D_{AX} (longitudinal direction).

### (2)Configuration of fluid pressure actuator

FIG. 2 is a side view of the fluid pressure actuator 10. As shown in FIG. 2, the fluid pressure actuator 10 includes the actuator main portion 100, a sealing mechanism 200, and a sealing mechanism 300. Connecting parts 20 are provided at both ends of the fluid pressure actuator 10.

The actuator main portion 100 comprises a tube 110 and a sleeve 120. Fluid flows into the actuator main portion 100 through a fitting 400 and a passage hole 410.

The actuator main portion 100 contracts in the axial direction D_{AX} of the actuator main portion 100 and expands in the radial direction D_{R} by inflow of fluid into the tube 110. The actuator main portion 100 expands in the axial direction D_{AX} of the actuator main portion 100 and contracts in the radial direction D_{R} by outflow of fluid from the tube 110. Due to the change in the shape of the actuator main portion 100, the fluid pressure actuator 10 functions as an actuator.

The fluid used to drive the fluid pressure actuator 10 may be either a gas, such as air, or a liquid, such as water or mineral oil, but in particular, the fluid pressure actuator 10 has high durability to withstand hydraulic drive under high pressure on the actuator main portion 100.

The fluid pressure actuator 10 is of the so-called McKibben type, and can be suitably used not only for artificial muscles but also for body limbs (upper limbs, lower limbs, etc.) of a robot requiring higher capability (contraction force). A member or the like constituting the limb is connected to the connecting part 20.

The sealing mechanism 200 and the sealing mechanism 300 seal both ends of the actuator main portion 100 in the axial direction D_{AX}. Specifically, the sealing mechanism 200 includes a sealing member 210 and a caulking member 230. The sealing member 210 seals the end of the actuator main portion 100 in the axial direction D_{AX}. The caulking member 230 caulks the actuator main portion 100 together with the sealing member 210. On the outer periphery of the caulking member 230, an pressed mark 231 is formed which is a trace of the caulking member 230 being caulked by a jig.

As the sealing member 210, a metal such as stainless steel can be suitably used, but it is not limited to such a metal, and a hard plastic material or the like may be used.

As the caulking member 230, metals such as aluminum alloy, brass and iron can be used.

The difference between the sealing mechanism 200 and the sealing mechanism 300 is whether or not the fitting 400 (and the passage hole 410) is provided.

The fitting 400 projects to attach the hose 180 connected to a drive pressure source of the fluid pressure actuator 10, specifically a gas or liquid supply device. The fluid flowing in through the fitting 400 passes through the passage hole 410 and flows into the inside of the actuator main portion 100, specifically into the inside of the tube 110.

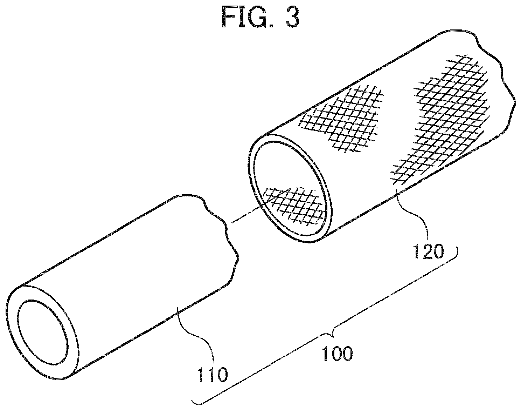

FIG. 3 is an exploded perspective view of the actuator main portion 100. As described above, the actuator main portion 100 includes the tube 110 and the sleeve 120.

In other words, the actuator main portion 100 includes the tube 110, and the shape of the actuator body changes due to the expansion or contraction of the tube 110.

The tube 110 is a cylindrical body which expands and contracts by the pressure of a fluid. The tube 110 is made of an elastic material such as butyl rubber in order to repeat contraction and expansion by fluid. When the fluid pressure actuator 10 is hydraulically driven, it is preferable to use at least one kind selected from the group consisting of NBR (nitrile rubber) having high oil resistance, hydrogenated NBR, chloroprene rubber and epichlorohydrin rubber.

In the present embodiment, the tube 110 is formed of a rubber member including a conductive material (which may be referred to as a filler). For example, the tube 110 may be formed of a rubber member containing carbon particles.

The sleeve 120 is cylindrical and covers the outer periphery of the tube 110. The sleeve 120 is a stretchable structure in which fiber cords oriented in a predetermined direction are woven, and a rhombic shape is repeated by crossing the oriented cords. By having such a shape, the sleeve 120 is pantographically deformed and follows the contraction and expansion of the tube 110 while regulating it.

As the cord constituting the sleeve 120, a fiber cord of aromatic polyamide (aramid fiber) or polyethylene terephthalate (PET) is preferably used. However, the present invention is not limited to such kind of fiber cord, and cord of high strength fiber such as PBO fiber (poly para phenylene benzobisoxazole) may be used.

### (3)Functional block configuration of the detection unit

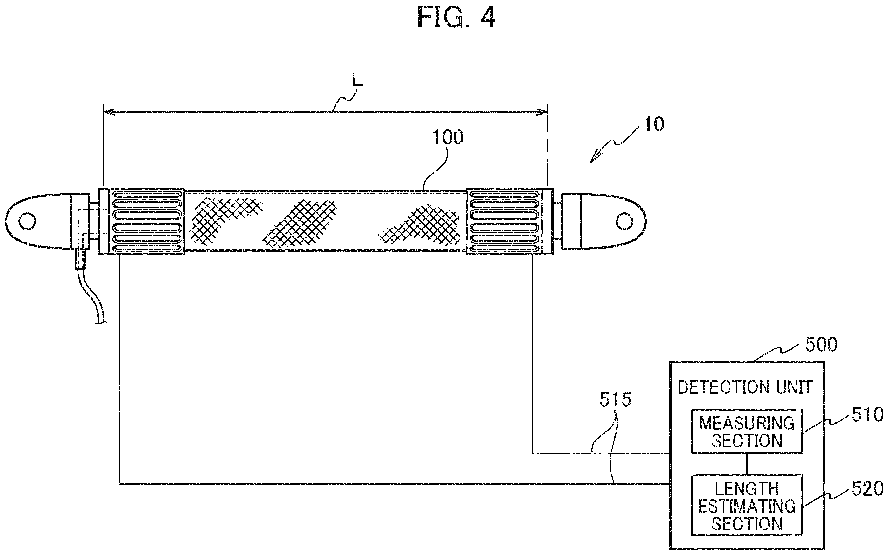

FIG. 4 is a functional block diagram of a detection unit 500 for detecting the length of the fluid pressure actuator 10.

As described above, the detection unit 500 detects the length of the fluid pressure actuator 10 that varies with the inflow of fluid into the actuator main portion 100 and the outflow of the fluid from the actuator main portion 100.

Specifically, the detection unit 500 detects the length L of the actuator main portion 100 along the longitudinal direction (axial direction D_{AX}) of the tube 110 (see FIGs. 2 and 3) constituting the actuator main portion 100.

The detection unit 500 includes a measuring section 510 and a length estimating section 520.

The measuring section 510 measures the electrical characteristics of the tube 110. Therefore, the detection unit 500 is electrically connected to both end portions of the tube 110 in the longitudinal direction (axial direction D_{AX}) of the actuator main portion 100. Specifically, both end portions of the tube 110 and the detection unit 500 are connected by the lead wire 515.

The measuring section 510 measures the electric resistance of the tube 110. Specifically, the measuring section 510 measures the value of the electric resistance (unit: MΩ or the like) between the ends of the tube 110 connected by the lead wire 515 in the longitudinal direction (axial direction D_{AX}).

The length estimating section 520 estimates the length L of the actuator main portion 100 based on the electrical characteristics measured by the measuring section 510.

Specifically, the length estimating section 520 estimates the length L based on the value of the electric resistance between the ends of the tube 110 in the longitudinal direction (axial direction D_{AX}).

More specifically, the length estimating section 520 estimates that the length L decreases as the electric resistance measured by the measuring section 510 decreases.

The length estimating section 520 estimates the length L using a mathematical expression (or table) showing the relationship between the length L of the actuator main portion 100 (tube 110) and the value of the electric resistance between the end portions in the longitudinal direction (axial direction D_{AX}) of the tube 110. An example of estimating the length L will be described later.

Although the fluid pressure actuator 10 and the detection unit 500 are shown as separate bodies in FIG. 4, the detection unit 500 may be assembled to or incorporated in the fluid pressure actuator 10. The detection unit 500 is preferably connected to a communication network such as IoT.

### (4)Operation of the fluid pressure actuator and the detection unit

Next, the operations of the fluid pressure actuator 10 and the detection unit 500 will be described. Specifically, the estimation operation of the length L of the actuator main portion 100 accompanying the expansion and contraction of the actuator main portion 100 will be described.

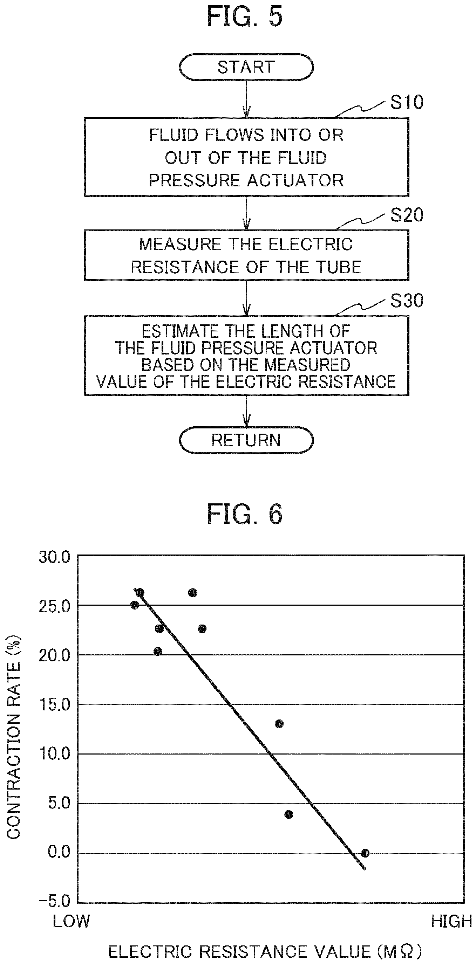

FIG. 5 shows an estimated operation flow of the length L of the actuator main portion 100 by the detection unit 500.

As shown in FIG. 5, in order to operate the fluid pressure actuator 10, fluid flows into or out of the fluid pressure actuator 10 (S 10).

The detection unit 500 measures the electric resistance of the tube 110 (S 20). Specifically, as described above, the detection unit 500 measures the value of the electrical resistance between the ends of the tube 110 in the longitudinal direction (axial direction D_{AX}).

The detection unit 500 estimates the length of the fluid pressure actuator 10, specifically, the length L of the actuator main portion 100, based on the measured value of the electric resistance (S 30).

The detection unit 500 repeats the processes of S 20 and S 30 at a predetermined cycle (For example, about 0.1 to 1 second.).

FIG. 6 is a graph showing the relationship between the contraction rate (%) of the actuator main portion 100 and the electric resistance value (MΩ) of the tube 110. As shown in FIG. 6, the contraction rate and the electric resistance value are quadratic correlation coefficients (R² = 0.9423).

The contraction rate (%) of the actuator main portion 100 means the degree of contraction of the actuator main portion 100 (Specifically, tube 110) with the length L in the state where the fluid does not flow into the actuator main portion 100 as a reference (0.0%).

The reason why the negative contraction rate is included is that the actuator main portion 100 may be extended more than the length L in the state where the actuator main portion 100 is not contracted by the load of the member 25 connected to the connecting part 20 of the fluid pressure actuator 10.

The detection unit 500 estimates the length L of the actuator main portion 100 by using a mathematical expression or a table capable of deriving a relationship between a parameter capable of determining the length L of the actuator main portion 100 (tube 110) and an electrical resistance value as shown in the graph of FIG. 6.

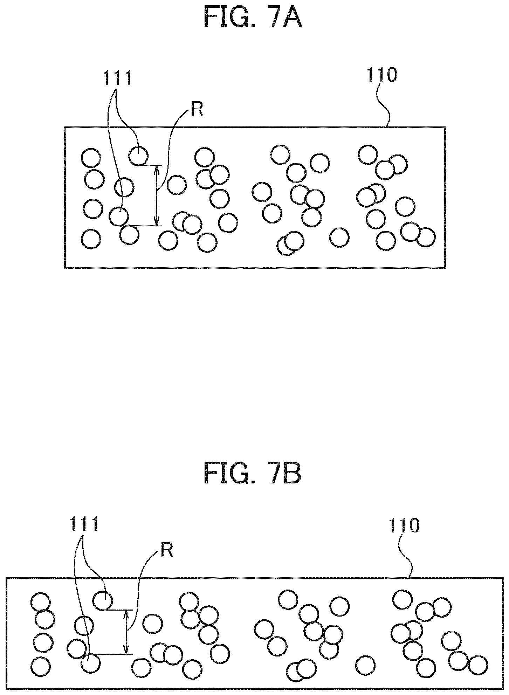

FIGs. 7A and 7B are diagrams schematically showing a dispersion state of carbon particles contained in the tube 110.

Specifically, FIG. 7A shows a dispersion state of carbon particles 111 in a state where the actuator main portion 100 is not contracted (a state where the contraction rate shown in FIG. 6 is 0.0%).

FIG. 7B shows the dispersion state of the carbon particles 111 in the state where the actuator main portion 100 is contracted.

As shown in FIG. 6, when the contraction rate of the actuator main portion 100 increases, the electric resistance value of the actuator main portion 100 (tube 110) decreases. When the fluid flows into the actuator main portion 100 and the actuator main portion 100 contracts, the tube 110 expands in the axial direction D_{AX} within a predetermined range regulated by the sleeve 120, and the thickness of the tube 110 is reduced, whereby the distance R between the carbon particles 111 included in the tube 110 is narrowed (see FIG. 7B).

Specifically, when the actuator main portion 100 contracts, the tube 110 expands, so that the film thickness of the tube 110 becomes thin. As a result, the size (that is, the distance R) of the carbon particles 111 in the film thickness direction is narrowed, and the carbon particles 111 (filler) approach each other.

That is, when the contraction rate of the actuator main portion 100 increases and the length L decreases, the distance R between the carbon particles 111 decreases, so that the conductivity of the tube 110 increases, in other words, the electric resistance value of the tube 110 decreases.

### (5)Function and effects

According to the embodiment described above, the following effects can be obtained. Specifically, the detection unit 500 of the fluid pressure actuator 10 detects the length L of the actuator main portion 100 whose shape changes due to the expansion or contraction of the tube 110.

Therefore, even in the case of a McKibben type fluid pressure actuator 10 in which the length L of an actuator main portion 100 can vary depending on the size of a load (member 25) applied to the fluid pressure actuator 10, the length L can be accurately detected in real time.

Further, according to the fluid pressure actuator 10, the following functions and effects are also expected. Specifically, responsiveness in control is improved. According to the fluid pressure actuator 10, the length L is detected by an external sensor (detection unit), the detection result is calculated by an arithmetic unit (CPU), and then feedback control is not performed, but the actuator main portion 100 can detect the length L, so that the reaction speed at the time of control is improved.

In addition, when a separate sensor is mounted, the number of components increases and the failure probability increases, but the fluid pressure actuator 10 can suppress the failure probability and stable operation can be expected.

In this embodiment, the detection unit 500 includes a measuring section 510 for measuring the electrical characteristics of the tube 110, and a length estimating section 520 for estimating the length L based on the measured electrical characteristics.

Specifically, the measuring section 510 measures the electrical resistance of the tube 110, and the length estimating section 520 estimates that the length L decreases as the measured electrical resistance decreases.

That is, as shown in FIGs. 7A and 7B, when the actuator main portion 100 contracts, the distance R between the carbon particles 111 included in the tube 110 is narrowed, so that the electric resistance of the tube 110 decreases. The length estimating section 520 estimates the length L by using such a phenomenon.

In addition, the fluid pressure actuator 10 has a simple configuration as compared with the fluid pressure actuator of modified example described later, since the tube 110 itself can be used for detecting the length L. Further, since the actuator main portion 100 does not need to incorporate a detection unit of the length L, it is lightweight and inexpensive.

In particular, considering that the fluid pressure actuator 10 may be mounted on a human body, it is desirable that the fluid pressure actuator be as lightweight as possible, but the fluid pressure actuator 10 can easily meet such a requirement for weight reduction.

In this embodiment, the tube 110 is formed of a rubber member comprising a conductive material (carbon particles 111). Therefore, the length L of the actuator main portion 100 can be estimated more accurately.

In this embodiment, the sleeve 120 is a stretchable structure in which fiber cords oriented in a predetermined direction are woven, and covers the outer periphery of the tube 110. Therefore, since the sleeve 120 follows the contraction and expansion of the tube 110 while regulating them, the tube 110 deforms within a predetermined range regulated by the sleeve 120. Therefore, since the deformation range of the tube 110, that is, the actuator main portion 100 is restricted, the length L can be measured more accurately.

### (6)Other Embodiments

Although the contents of the present invention have been described above with reference to the examples, it will be obvious to those skilled in the art that the present invention is not limited to these descriptions and that various modifications and improvements are possible.

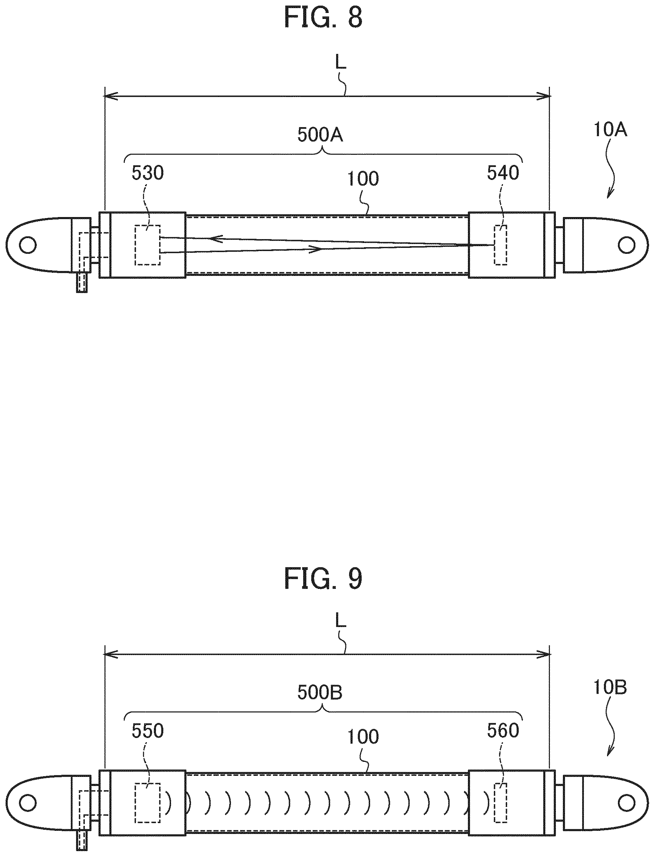

For example, the above-described fluid pressure actuator 10 may be modified as follows. FIG. 8 is a side view of a fluid pressure actuator 10 A according to a modified example.

As shown in FIG. 8, the fluid pressure actuator 10 A incorporates a detection unit 500 A. The detection unit 500 A includes a laser beam transmission/reception section 530 and a reflection section 540.

The laser beam transmission/reception section 530 irradiates a laser beam toward the reflection section 540 and estimates the length L of the actuator main portion 100 based on the time until the laser beam reflected by the reflection section 540 returns.

FIG. 9 is a side view of another modified example fluid pressure actuator 10 B. As shown in FIG. 9, the fluid pressure actuator 10 B incorporates a detection unit 500 B. The detection unit 500 B includes an ultrasonic transmission/reception section 550 and a reflection section 560.

The ultrasonic transmission/reception section 550 transmits an ultrasonic signal to the reflection section 560, and estimates the length L of the actuator main portion 100 based on the time until the ultrasonic signal reflected by the reflection section 560 returns.

In the above-described embodiment, the detection unit 500 measures the electrical resistance of the tube 110, but it may measure electrical characteristics other than the electrical resistance to estimate the length L. For example, the detection unit 500 may measure the capacitance of the tube 110 and estimate the length L based on the measured capacitance.

Further, when the conductive material, that is, the tube 110 is formed of conductive rubber, it is not limited to the carbon particles 111 as described above, and natural rubber or synthetic rubber containing metal powder may be used.

While embodiments of the invention have been described as above, it should not be understood that the statements and drawings which form part of this disclosure are intended to limit the invention. Various alternative embodiments, examples and operating techniques will become apparent to those skilled in the art from this disclosure.

### [Reference Signs List]

- 10, 10 A, 10 B: Fluid pressure actuator
- 20: Connecting part
- 25: Member
- 100: Actuator main portion
- 110: Tube
- 111: Carbon particles
- 120: Sleeve
- 180: Hose
- 200: Sealing mechanism
- 210: Sealing member
- 230: Caulking member
- 231: Pressed mark
- 300: Sealing mechanism
- 400: Fitting
- 410: Passage hole
- 500, 500 A, 500 B: Detection unit
- 510: Measuring section
- 515: Lead wire
- 520: Length estimating section
- 530: Laser beam transmission/reception section
- 540: Reflection section
- 550: Ultrasonic transmission/reception section
- 560: Reflection section

## Claims

1. A fluid pressure actuator comprising:
an actuator main portion including a tube having a cylindrical shape that is expanded and contracted by pressure of fluid and changing in shape by expansion or contraction of the tube; and
a detection unit for detecting a length of the actuator main portion along a longitudinal direction of the tube.

2. The fluid pressure actuator according to claim 1, wherein the detection unit comprises:
a measuring section for measuring electrical characteristics of the tube; and
a length estimating section for estimating the length based on the electrical characteristic measured by the measuring unit.

3. The fluid pressure actuator of claim 2, wherein the measuring section measures an electrical resistance of the tube, and
the length estimating section is configured such that, as the electrical resistance measured by the measuring unit decreases, the length is estimated to be reduced.

4. The fluid pressure actuator of claim 2 or 3, wherein the tube is formed of a rubber member comprising a conductive material.

5. The fluid pressure actuator according to any one of claims 1 to 4, wherein the actuator main portion includes a sleeve covering an outer periphery of the tube.

6. A detection unit connected to a fluid pressure actuator, wherein
the fluid pressure actuator includes an actuator main portion including a tube having a cylindrical shape that is expanded and contracted by pressure of fluid and changing in shape by expansion or contraction of the tube; and
the detection unit detects a length of the actuator main portion along a longitudinal direction of the tube.
